# FASCICULE DE BREVET EUROPEEN

(11) **EP 3 224 057 B1**
(45) Date de publication et mention de la délivrance du brevet: **05.01.2022**
(21) Numéro de dépôt: 15798452.7
(22) Date de dépôt: 24.11.2015
(51) Int. Cl.: B60C 1/00, C08L 7/00, C08L 21/00, C08K 3/04, C08K 3/36, C08L 23/20

(54) **PNEUMATIQUE COMPRENANT UN FLANC EXTERNE QUI COMPORTE UN POLYMÈRE INCOMPATIBLE**
REIFEN MIT EINER ÄUSSEREN SEITENWAND MIT EINEM UNVERTRÄGLICHEN POLYMER
TYRE INCLUDING AN OUTER SIDEWALL THAT COMPRISES AN INCOMPATIBLE POLYMER

(30) Priorité: 25.11.2014 FR 1461414
(43) Date de publication de la demande: 04.10.2017
(73) Titulaire: COMPAGNIE GENERALE DES ETABLISSEMENTS MICHELIN, 63000 Clermont-Ferrand (FR)
(72) Inventeur: VACHERAND, Jean-Michel, F-63040 Clermont-Ferrand Cedex 09 (FR); LIBERT, Romain, F-63040 Clermont-Ferrand Cedex 09 (FR); GREIVELDINGER, Marc, F-63040 Clermont-Ferrand Cedex 09 (FR)
(74) Mandataire: Bocchi, Brigitte
(86) Numéro de dépôt international: PCT/EP2015/077491
(87) Numéro de publication internationale: WO 2016/083367

(56) Documents cités:
- FR-A1- 2 274 645
- US-A- 5 964 969
- None

## Description

La présente invention est relative aux pneumatiques et plus particulièrement aux flancs externes de pneumatiques.

Il est possible de définir au sein du pneumatique trois types de zones :
- La zone radiale extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche au gaz de gonflage, parfois appelée gomme intérieure (« inner liner » en anglais).
- La zone interne du pneumatique, c'est-à-dire celle comprise entre les zones extérieures et intérieures. Cette zone inclut des couches ou nappes qui sont appelées ici couches internes du pneumatique. Ce sont par exemple des nappes carcasses, des sous-couches de bandes de roulements, des nappes de ceintures de pneumatiques ou toute autre couche qui n'est pas en contact avec l'air ambiant ou le gaz de gonflage du pneumatique.

Le flanc externe peut selon les besoins comporter une ou plusieurs nappes de protection, situées à l'extérieur par rapport à l'armature de carcasse, chargées de protéger le reste de la structure du flanc des agressions externes : chocs, déchirures ou autres perforations.

C'est par exemple le cas dans les flancs de certains pneumatiques destinés à des roulages sur des sols relativement agressifs, par exemple sur des véhicules de tourisme du type rallye ou encore sur des véhicules industriels hors la route du type chantier.

Ces nappes de protection doivent être suffisamment souples et déformables pour d'une part épouser au mieux la forme de l'obstacle sur lequel le flanc est susceptible de s'appuyer lors du roulage, et d'autre part s'opposer à la pénétration éventuelle de corps étrangers à l'intérieur de celui-ci. La satisfaction de tels critères nécessite généralement l'utilisation dans ces nappes ou couches de protection de fils de renforcement sous forme de câbles élastiques à torons métalliques combinant une haute élasticité et une énergie à la rupture élevée.

De telles nappes de protection métalliques pour flancs de pneumatiques sont bien connues, elles ont été décrites par exemple dans les brevets ou demandes de brevet FR 1 502 689 (ou US 3 464 477), EP 1 270 273 (ou US 2003/0005993).

Elles présentent toutefois un certain nombre d'inconvénients. Outre le fait qu'elles alourdissent de manière conséquente les flancs des pneumatiques, elles sont constituées de câbles à torons qui sont relativement coûteux, ceci à double titre : d'une part, ces derniers sont préparés en deux étapes, à savoir par fabrication préalable des torons puis assemblage par retordage de ces torons ; d'autre part, ils nécessitent généralement une torsion élevée de leurs fils (soit des pas d'hélice très courts), torsion certes indispensable pour leur conférer l'élasticité souhaitée mais impliquant des vitesses de fabrication réduites. Cet inconvénient se répercute bien entendu sur le coût des pneumatiques eux-mêmes.

Par conséquent, de telles modifications du flanc externe ne sont pas applicables à des pneumatiques destinés à des véhicules de tourisme.

Néanmoins, la demande des utilisateurs est forte pour disposer de pneumatiques, en particulier destinés à des véhicules de tourisme qui comportent des flancs résistants aux agressions externes comme les chocs, les déchirures ou autres perforations. Il peut s'agir en particulier des contacts entre le pneumatique et un trottoir qui peuvent endommager fortement, voire perforer le pneumatique.

**On connaît par ailleurs du document** US 5 964 969 **un pneumatique pourvu d'un flanc externe comprenant a) une composition de caoutchouc renforcée au noir de carbone et b) une composition de caoutchouc « blanche » comprenant entre autres un caoutchouc diénique, un caoutchouc butyle, un caoutchouc EPDM de haut poids moléculaire et un caoutchouc EPDM de faible poids moléculaire. Il est indiqué que le noir de carbone, s'il est présent dans la composition « blanche », y est présent à une teneur inférieure à 1 pce.**

Il existe donc un besoin de développer un flanc externe de pneumatique qui soit plus résistant aux agressions extérieures sans cependant l'alourdir de manière importante.

Les Demanderesses ont donc développé un pneumatique comprenant un flanc extérieur avec un faible coefficient de frottement à partir d'une composition élastomérique comprenant un polymère incompatible avec la matrice élastomérique.

L'invention a donc pour objet un pneumatique pourvu d'un flanc externe, ledit flanc externe comprenant au moins une composition élastomérique à base de :
a) une matrice élastomérique comprenant au moins un élastomère diénique,
b) un système de réticulation,
c) au moins un polymère incompatible avec la matrice élastomérique.

Le pneumatique selon l'invention comprenant le flanc extérieur avec un faible coefficient de frottement permet de faire « glisser » l'agresseur extérieur sur le flanc, et en particulier évite la pénétration dans le flanc d'un agresseur extérieur ou au moins minimise la profondeur agressée du flanc lors du frottement de celui-ci sur l'agresseur extérieur.

De plus, ce flanc externe ne comporte pas nécessairement de protection métallique et il est par conséquent plus facile à préparer et de manière plus rapide. Ainsi, les coûts de revient du pneumatique selon l'invention sont réduits par rapport à des pneumatiques comprenant des flancs comprenant une protection métallique.

Enfin, dans le cas où le flanc externe ne comporte pas de protection métallique, il est plus souple ce qui améliore la perception de confort pour l'utilisateur par rapport à un flanc comprenant des protections métalliques.

L'invention a également pour objet un procédé pour préparer une composition élastomérique pour la fabrication de pneumatiques telle que définie ci-dessus, caractérisé en ce qu'il comprend les étapes suivantes :
- incorporer à la matrice élastomérique, au cours d'une première étape, la ou les éventuelles charges renforçantes, en malaxant thermomécaniquement le tout, en une ou plusieurs fois, jusqu'à atteindre une température maximale T₁ comprise entre 110°C et 190°C, puis
- incorporer au mélange au cours d'une deuxième étape, le ou les polymères incompatibles jusqu'à atteindre une température T₂ supérieure à 110°C, puis
- incorporer ensuite, au cours d'une troisième étape, le système de réticulation et malaxer le tout à une température maximale inférieure à 90°C.

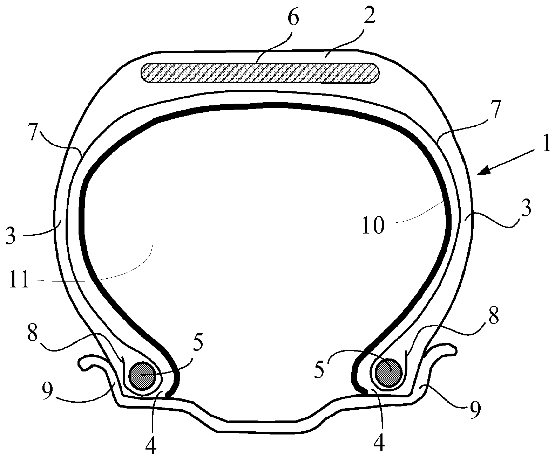

L'invention ainsi que ses avantages seront aisément compris à la lumière de la description, des exemples de réalisations qui suivent et de la figure unique qui schématise, en coupe radiale, un pneumatique conforme à l'invention.

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères c'est-à-dire du poids total du ou des élastomères de la matrice élastomérique. Ainsi, un constituant à 60 pce signifiera par exemple 60 g de ce constituant pour 100 g d'élastomère.

De plus, il faut noter que le ou les polymères incompatibles ne sont pas considérés, au sens de la présente invention, comme faisant partie de la matrice élastomérique.

Par l'expression « composition à base de » il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en œuvre pour l'invention peuvent être différentes à l'état non réticulé et à l'état réticulé.

Ainsi, un premier objet de l'invention est un pneumatique pourvu d'un flanc externe, ledit flanc externe comprenant au moins une composition élastomérique à base de :
a) une matrice élastomérique comprenant au moins un élastomère diénique,
b) un système de réticulation,
c) au moins un polymère incompatible avec la matrice élastomérique.

Par « polymère incompatible avec la matrice élastomérique » dans la présente demande, on entend que le mélange de ce polymère et de la matrice élastomérique présente au moins deux températures de transition vitreuse (Tg).

Dans la présente description, sauf indication expresse différente, la ou les températures de transition vitreuse sont définies comme la ou les températures pour lesquelles on observe l'intersection entre la droite tangente au plateau vitreux et la droite tangente à la zone de transition entre le plateau vitreux et le plateau caoutchoutique, lors du balayage en température d'un échantillon réticulé (taille de l'échantillon longueur : 6 mm, largeur : 5 mm, épaisseur : 2 mm) soumis à une sollicitation sinusoïdale (fréquence de 10 Hz). Comme indiqué précédemment, cette ou ces Tg sont mesurées lors de la mesure des propriétés dynamiques, sur un viscoanalyseur (DVA 200 - IT Instrumental Control), selon la norme JIS K 6384 (Testing Methods for Dynamic Properties of Vulcanized Rubber and Thermoplastic Rubber).

Comme expliqué précédemment, la composition élastomérique utilisable dans le flanc externe du pneumatique selon l'invention comprend une matrice élastomérique comprenant au moins un élastomère diénique.

Par « matrice élastomérique » dans la présente demande, on désigne l'ensemble des élastomères de la composition élastomérique sauf le polymère incompatible avec la matrice élastomérique.

Par élastomère diénique, doit être compris de manière connue un élastomère issu au moins en partie c'est-à-dire un homopolymère ou un copolymère, de monomères diènes.

De manière connue en soi, un monomère diène est un monomère comprenant deux doubles liaisons carbone-carbone, conjuguées ou non.

Le ou les élastomères diéniques utilisables selon l'invention peuvent être classés dans deux catégories : « essentiellement insaturés » ou « essentiellement saturés ».

On entend en général par « essentiellement insaturé », un élastomère diénique issu au moins en partie de monomères diènes conjugués, ayant un taux de motifs ou unités issues d'un diène conjugué qui est supérieur à 15 % en moles.

On entend en particulier par élastomère diénique « fortement insaturé » un élastomère diénique ayant un taux de motifs ou unités issues d'un diène conjugué qui est supérieur à 50 % en moles.

A l'inverse, on entend en général par « essentiellement saturé », un élastomère diénique issu au moins en partie de monomères diènes conjugués, ayant un taux de motifs ou unités issues d'un diène conjugué qui est inférieur ou égal à 15 % en moles.

C'est ainsi que des élastomères diéniques tels que certains caoutchoucs butyles ou les copolymères de diènes et d'alpha-oléfines type EPDM peuvent être qualifiés d'élastomères diéniques « essentiellement saturés ».

De manière préférée, le ou les élastomères diéniques de la matrice élastomérique utilisable dans le pneumatique de l'invention sont choisis parmi les élastomères diéniques essentiellement insaturés, et les mélanges de ces élastomères.

On entend plus particulièrement par élastomère diénique essentiellement insaturé, susceptible d'être utilisé dans la composition élastomérique du flanc externe du pneumatique conforme à l'invention :
(a) tout homopolymère obtenu par polymérisation d'un monomère diène conjugué ayant de 4 à 12 atomes de carbone ;
(b) tout copolymère obtenu par copolymérisation d'un ou plusieurs diènes conjugués entre eux ou avec un ou plusieurs composés vinyles aromatiques ayant de 8 à 20 atomes de carbone ;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'1,4-hexadiène, l'éthylidène norbornène, le dicyclopentadiène,
(d) les mélanges de ces polymères.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyles aromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Lorsque le ou les élastomères diéniques essentiellement insaturés sont choisis parmi les copolymères obtenus par copolymérisation d'un ou plusieurs diènes conjugués entre eux ou avec un ou plusieurs composés vinyles aromatiques ayant de 8 à 20 atomes de carbone, ceux-ci peuvent contenir entre 99 % et 20 % en poids d'unités diéniques conjugués et entre 1 % et 80 % en poids d'unités vinyles aromatiques.

Les élastomères diéniques utilisables selon l'invention peuvent avoir toute microstructure qui est fonction des conditions de polymérisation utilisées, notamment de la présence ou non d'un agent modifiant et/ou randomisant et des quantités d'agent modifiant et/ou randomisant employées.

Les élastomères diéniques utilisables selon l'invention peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage avec du noir de carbone, on peut citer par exemple des groupes fonctionnels comprenant une liaison C-Sn ou des groupes fonctionnels aminés tels que la benzophénone par exemple ; pour un couplage à une charge inorganique renforçante telle que la silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973).

Comme autres exemples d'élastomères fonctionnalisés, on peut citer également des élastomères (tels que SBR, BR, NR ou IR) du type époxydés.

A titre d'élastomère diénique utilisable dans la composition élastomérique du flanc externe du pneumatique selon l'invention, conviennent les polybutadiènes et en particulier ceux ayant une teneur (% molaire) en unités -1,2 comprise entre 4 % et 80 % ou ceux ayant une teneur (% molaire) en cis-1,4 supérieure à 80 %, les polyisoprènes, les copolymères de butadiène-styrène et en particulier ceux ayant une température de transition vitreuse, Tg, (mesurée selon ASTM D3418) comprise entre 0°C et -70°C et plus particulièrement entre -10°C et -60°C, une teneur en styrène comprise entre 5 % et 60 % en poids et plus particulièrement entre 20 % et 50 %, une teneur (% molaire) en liaisons -1,2 de la partie butadiénique comprise entre 4 % et 75 %, une teneur (% molaire) en liaisons trans-1,4 comprise entre 10 % et 80 %, les copolymères de butadiène-isoprène et notamment ceux ayant une teneur en isoprène comprise entre 5 % et 90 % en poids et une Tg de -40°C à -80°C, les copolymères isoprène-styrène et notamment ceux ayant une teneur en styrène comprise entre 5 % et 50 % en poids et une Tg comprise entre - 25°C et -50°C. Dans le cas des copolymères de butadiène-styrène-isoprène, conviennent notamment ceux ayant une teneur en styrène comprise entre 5 % et 50 % en poids, et plus particulièrement comprise entre 10 % et 40 %, une teneur en isoprène comprise entre 15 % et 60 % en poids, et plus particulièrement entre 20 % et 50 %, une teneur en butadiène comprise entre 5 % et 50 % en poids, et plus particulièrement comprise entre 20 % et 40 %, une teneur (% molaire) en unités -1,2 de la partie butadiénique comprise entre 4 % et 85 %, une teneur (% molaire) en unités trans -1,4 de la partie butadiénique comprise entre 6 % et 80 %, une teneur (% molaire) en unités -1,2 plus -3,4 de la partie isoprénique comprise entre 5 % et 70 % et une teneur (% molaire) en unités trans - 1,4 de la partie isoprénique comprise entre 10 % et 50 %, et plus généralement tout copolymère butadiène-styrène-isoprène ayant une Tg comprise entre -20°C et -70°C.

Le ou les élastomères diéniques utilisables selon l'invention peuvent être tout particulièrement choisis parmi les élastomères isoprèniques.

Par « élastomère isoprènique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Parmi les copolymères d'isoprène, on citera en particulier les copolymères d'isoprène-styrène (SIR), d'isoprène-butadiène (BIR) ou d'isoprène-butadiène-styrène (SBIR).

De manière préférée, les élastomères isopréniques sont choisis parmi le caoutchouc naturel et le polyisoprène cis-1,4 de synthèse.

Parmi les polyisoprènes de synthèse, sont utilisés de préférence les polyisoprènes ayant un taux (% molaire) de liaisons cis-1,4 supérieur à 90 %, plus préférentiellement encore supérieur à 98 %.

De manière préférée, le ou les élastomères diéniques utilisables dans le flanc du pneumatique selon l'invention sont choisis parmi les homopolymères obtenus par polymérisation d'un monomère diène conjugué ayant de 4 à 12 atomes de carbone, les copolymères obtenus par copolymérisation d'un ou plusieurs monomères diènes conjugués entre eux ou avec un ou plusieurs composés vinyles aromatiques ayant de 8 à 20 atomes de carbone, et les mélanges de ces polymères.

De manière particulièrement préférée, le ou les élastomères diéniques sont choisis parmi les polybutadiènes (en abrégé « BR »), les polyisoprènes de synthèse (IR), le caoutchouc naturel (NR), les copolymères de butadiène, les copolymères d'isoprène, les copolymères de butadiène-styrène (SBR), les copolymères d'isoprène-butadiène (BIR), les copolymères d'isoprène-styrène (SIR) et les copolymères d'isoprène-butadiène-styrène (SBIR) et les mélanges de ces élastomères.

La teneur en élastomères diéniques dans la composition élastomérique utilisable dans le flanc du pneumatique selon l'invention varie généralement de 60 à 100 pce, de préférence de 70 à 100 pce.

Dans un mode particulièrement préféré de la présente invention, le ou les élastomères diéniques représentent le ou les seuls élastomères constitutifs de la matrice élastomérique, c'est-à-dire que la teneur en élastomères diéniques dans la composition élastomérique utilisable dans le flanc du pneumatique selon l'invention est de 100 pce.

Comme énoncé précédemment, la composition élastomérique du flanc externe utilisable dans le pneumatique selon l'invention comprend également un système de réticulation.

Le système de réticulation peut être un système de vulcanisation. Dans ce cas, il est préférentiellement à base de soufre ou à base d'un donneur de soufre et d'un accélérateur primaire de vulcanisation.

Parmi les donneurs de soufre on peut citer par exemple les alkyl phénol disulfures (APDS) tel que par exemple le disulfure de para-tertiobutylphénol.

Le soufre ou le donneur de soufre est généralement utilisé à une teneur préférentielle allant de 0,5 à 10 pce, plus préférentiellement allant de 0,5 à 5,0 pce, par exemple allant de 0,5 à 3,0 pce.

On peut utiliser comme accélérateur primaire tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé « MBTS »), N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI »), dibenzyldithiocarbamate de zinc (en abrégé « ZBEC ») et les mélanges de ces composés.

De préférence, on utilise un accélérateur primaire du type sulfénamide.

A ce système de vulcanisation viennent optionnellement s'ajouter, divers accélérateurs secondaires ou activateurs de vulcanisation connus tels qu'oxyde de zinc, acide stéarique, dérivés guanidiques (en particulier diphénylguanidine), etc.

La teneur de chaque accélérateur primaire ou secondaire de vulcanisation et de chaque activateur de vulcanisation varie généralement de 0,5 à 5,0 pce.

Comme énoncé précédemment la composition élastomérique du flanc externe utilisable dans le pneumatique selon l'invention comprend également un ou plusieurs polymères incompatibles.

De manière préférée, le ou les polymères incompatibles sont choisis parmi les polymères ayant une masse moléculaire moyenne en nombre inférieure ou égale à 20 000 g/mol, de préférence inférieure ou égale à 10 000 g/mol, plus préférentiellement allant de 200 à 4000 g/mol, encore plus préférentiellement allant de 200 à 3000 g/mol.

La masse moléculaire moyenne en nombre (Mn) du ou des polymères incompatibles peut être déterminée de manière connue en soi, par SEC.

L'échantillon est préalablement solubilisé dans du tétrahydrofuranne à une concentration d'environ 1 g/l ; puis la solution est filtrée sur filtre de porosité 0,45 µm avant injection. L'appareillage est la chaîne chromatographique « WATERS alliance ». Le solvant d'élution est le tétrahydrofuranne, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

De manière préférée, le ou les polymères incompatibles sont choisis parmi les polybutènes.

De manière particulièrement préférée, le polymère incompatible est un polyisobutylène.

Les polybutènes, de préférence les polyisobutylènes permettent d'atteindre le meilleur compromis de propriétés comparativement aux autres huiles testées, notamment à des huiles conventionnelles du type paraffiniques.

Etant donné que le ou les polymères visés sont incompatibles avec la matrice élastomérique, ils ont tendance à se rassembler au sein de la composition élastomérique.

Par conséquent, le ou les polymères incompatibles sont généralement sous forme de vésicules dans la composition élastomérique.

De plus, ces vésicules peuvent avoir tendance à migrer vers la surface du flanc externe préparé au moyen de la composition élastomérique.

Lorsqu'un agresseur extérieur est en contact avec le flanc externe du pneumatique selon l'invention, les vésicules de polymères incompatibles peuvent se casser et le ou les polymères incompatibles servent alors de « lubrifiant » afin de diminuer le coefficient de frottement du flanc externe.

De plus, le ou les polymères incompatibles doit pouvoir « s'étaler » rapidement lors d'une agression pour diminuer l'énergie de surface.

Ainsi, de préférence, le ou les polymères incompatibles sont choisis parmi les liquides visqueux, c'est-à-dire les liquides présentant une viscosité cinématique à 100°C variant de 20 à 200 000 SUS (selon la norme ASTM D2161), de préférence de 100 à 100 000 SUS, et plus préférentiellement de 200 à 50 000 SUS.

Ainsi, l'agresseur extérieur ne pénètre pas ou faiblement le flanc externe et ainsi diminue les dégâts pouvant être causés au pneumatique comportant ce flanc.

La teneur en polymère(s) incompatible(s) dans la composition élastomérique est généralement inférieure à 30 pce, de préférence varie de 1 à 20 pce, plus préférentiellement de 5 à 15 pce.

La composition élastomérique du flanc externe utilisable dans le pneumatique selon l'invention comprend en outre au moins une charge renforçante.

On peut utiliser tout type de charge renforçante connue pour ses capacités à renforcer une composition de caoutchouc utilisable pour la fabrication de pneumatiques, par exemple du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, utilisés individuellement ou sous forme de mélanges, notamment les noirs du type HAF, ISAF, SAF conventionnellement utilisés dans les pneumatiques (noirs dits de grade pneumatique). On peut aussi utiliser, selon les applications visées, des noirs de séries plus élevées FF, FEF, GPF, SRF. Les noirs de carbone pourraient être par exemple déjà incorporés à l'élastomère diénique sous la forme d'un masterbatch, avant ou après greffage et de préférence après greffage (voir par exemple les demandes WO 97/36724 ou WO 99/16600).

Comme charge inorganique renforçante autre que du noir de carbone, doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de pneumatiques ; une telle charge se caractérise généralement, de manière connue, par la présence de groupes hydroxyle (-OH) à sa surface.

L'état physique sous lequel se présente la charge renforçante est indifférent, que ce soit sous forme de poudre, de microperles, de granulés, de billes ou toute autre forme densifiée appropriée. Bien entendu on entend également par charge renforçante des mélanges de différentes charges renforçantes, en particulier de charges siliceuses et/ou alumineuses hautement dispersibles telles que décrites ci-après.

Comme charges inorganiques renforçantes autre que du noir de carbone conviennent notamment des charges minérales du type siliceuse, en particulier de la silice (SiO₂), ou du type alumineuse, en particulier de l'alumine (Al₂O₃).

De préférence, le ou les charges renforçantes sont du noir de carbone et/ou de la silice, et de préférence la charge renforçante est du noir de carbone.

Lorsque la charge renforçante comprend une charge nécessitant l'utilisation d'un agent de couplage pour établir la liaison entre la charge et la matrice élastomérique, la composition élastomérique comprend en outre, de manière classique, un agent susceptible d'assurer efficacement cette liaison. Lorsque la silice est présente dans la composition élastomérique à titre de charge renforçante, on utilise de manière connue un agent de couplage (ou agent de liaison) au moins bifonctionnel destiné à assurer une connexion suffisante, de nature chimique et/ou physique, entre la charge inorganique (surface de ses particules) et la matrice élastomérique, en particulier des organosilanes ou des polyorganosiloxanes bifonctionnels.

On utilise notamment des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits « symétriques » répondant à la formule générale (I) suivante :

(I) Z - A - Sx - A - Z

dans laquelle :
- x est un entier de 2 à 8, de préférence de 2 à 5 ;
- A est un radical hydrocarboné divalent, de préférence des groupements alkylène en C₁-C₁₈ ou des groupements arylène en C₆-C₁₂, plus particulièrement des alkylènes en C₁-C₁₀, notamment en C₁-C₄, en particulier le propylène ;
- Z répond à l'une des formules ci-après : 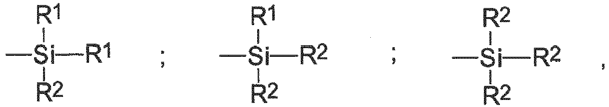 dans lesquelles :
- les radicaux R¹, substitués ou non substitués, identiques ou différents entre eux, représentent un groupe alkyle en C₁-C₁₈, cycloalkyle en C₅-C₁₅ ou aryle en C₆-C₁₈, de préférence représentent des groupes alkyle en C₁-C₆, cyclohexyle ou phényle, notamment des groupes alkyle en C₁-C₄, et plus particulièrement représentent le méthyle et/ou l'éthyle,
- les radicaux R², substitués ou non substitués, identiques ou différents entre eux, représentent un groupe alkoxyle en C₁-C₁₈ ou cycloalkoxyle en C₅-C₁₈, de préférence représentent un groupe choisi parmi alkoxyles en Ci-Cs et cycloalkoxyles en C₅-C₈, plus préférentiellement encore représentent un groupe choisi parmi alkoxyles en C₁-C₄, et en particulier représentent un groupe méthoxyle et éthoxyle.

Dans le cas d'un mélange d'alkoxysilanes polysulfurés répondant à la formule (I) ci-dessus, notamment des mélanges usuels disponibles commercialement, la valeur moyenne des « x » est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533 et WO 2006/125534.

Dans la matrice élastomérique utilisable selon l'invention, la teneur en agent de couplage varie préférentiellement de 0,5 à 12 pce, étant entendu qu'il est en général souhaitable d'en utiliser le moins possible. La présence de l'agent de couplage dépend de celle de la charge inorganique renforçante autre que du noir de carbone. Son taux est aisément ajusté par l'homme du métier selon le taux de cette charge ; il est typiquement de l'ordre de 0,5 à 15 % en poids par rapport à la quantité de charge inorganique renforçante autre que du noir de carbone.

L'homme du métier comprendra qu'à titre de charge équivalente de la charge inorganique renforçante autre que noir de carbone, pourrait être utilisée une charge renforçante d'une autre nature, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et la matrice élastomérique.

La composition élastomérique utilisable selon l'invention peut également comprendre, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisées telles que décrites dans les demandes WO-A-2006/069792, WO-A-2006/069793, WO-A-2008/003434 et WO-A-2008/003435.

La teneur en charge(s) renforçante(s) dans la composition élastomérique utilisable dans le flanc externe du pneumatique selon l'invention varie de 1 à 90 pce, plus préférentiellement de 5 à 80 pce, en particulier de 10 à 70 pce, l'optimum étant, de manière connue en soi, différent selon les applications particulières visées.

La composition élastomérique et les éventuelles charges renforçantes décrites plus haut sont suffisantes à elles seules pour que soient remplies les fonctions du flanc externe du pneumatique selon l'invention.

Toutefois, selon un mode de réalisation préférentiel de l'invention, la composition élastomérique précédemment décrite comporte également un agent plastifiant, dont la fonction est de faciliter la mise en œuvre du flanc externe, particulièrement son intégration dans l'objet pneumatique par un abaissement du module et une augmentation du pouvoir tackifiant.

Cet agent plastifiant est compatible avec la matrice élastomérique. Par opposition avec la définition d'un polymère incompatible, un agent compatible avec la matrice élastomérique signifie que le mélange de cet agent et de la matrice élastomérique présente une seule température de transition vitreuse (Tg).

On peut utiliser tout type de plastifiant qui peut être une résine ou une huile d'extension différente du polymère incompatible utilisé selon l'invention. La dénomination « résine » est réservée dans la présente demande, par définition connue de l'homme du métier, à un composé qui est solide à température ambiante (23°C), par opposition à un composé plastifiant liquide tel qu'une huile d'extension ou une huile plastifiante. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

Les résines hydrocarbonées sont des polymères bien connus de l'homme du métier, essentiellement à base de carbone et hydrogène, utilisables en particulier comme agents plastifiants dans des compositions élastomériques. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. « Rubber Tires and Mechanical Goods »). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont par définition miscibles (i.e., compatibles) aux taux utilisés avec les compositions élastomériques auxquelles elles sont destinées, de manière à agir comme de véritables agents diluants. Leur Tg est de préférence supérieure à 0°C, notamment supérieure à 20°C (le plus souvent comprise entre 30°C et 120°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, « softening point »), température à laquelle le produit, par exemple sous forme de poudre, s'agglutine. La température de ramollissement d'une résine hydrocarbonée est généralement supérieure d'environ 50 à 60°C à sa valeur de Tg.

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme « terpène » regroupe ici de manière connue les monomères alpha-pinène, béta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination « Dercolyte » pour ce qui concerne les résines polylimonène, par la société Neville Chemical Company sous dénomination « Super Nevtac », par Kolon sous dénomination « Hikorez » ou par la société Exxon Mobil sous dénomination « Escorez » pour ce qui concerne les résines coupe C5/ styrène ou résines coupe C5/ coupe C9, par la société Struktol sous dénomination « 40 MS » ou « 40 NS » (mélanges de résines aromatiques et/ou aliphatiques).

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un flanc externe de pneumatique.

La masse moléculaire moyenne en nombre (Mn) de l'huile d'extension est déterminée par chromatographie d'exclusion stérique (SEC), l'échantillon étant préalablement solubilisé dans du tétrahydrofuranne à une concentration d'environ 1 g/l ; puis la solution est filtrée sur filtre de porosité 0,45 µm avant injection. L'appareillage est la chaîne chromatographique « WATERS alliance ». Le solvant d'élution est le tétrahydrofuranne, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

Lorsqu'il est utilisé, on préfère que le taux de plastifiant varie de 2 à 60 pce, plus préférentiellement de 3 à 50 pce. En dessous du minimum indiqué, la présence de plastifiant n'est pas sensible. Au-delà du maximum préconisé, on s'expose à un risque de cohésion insuffisante de la composition élastomérique.

La composition élastomérique utilisable dans le flanc externe du pneumatique selon l'invention peut aussi comprendre une charge lamellaire.

L'utilisation optionnelle de charge lamellaire permet avantageusement d'abaisser le coefficient de perméabilité (donc d'augmenter l'étanchéité) de la composition élastomérique, sans augmenter de façon excessive son module, ce qui permet de conserver la facilité d'intégration du flanc externe dans l'objet pneumatique.

Les charges dites lamellaires (en anglais « platy fillers ») sont bien connues de l'homme du métier. Elles ont été utilisées notamment dans des bandages pneumatiques pour réduire la perméabilité des couches étanches conventionnelles à base de caoutchouc butyl. Elles sont généralement utilisées à des taux relativement faibles, n'excédant pas le plus souvent 1 à 50 pce, soit des taux volumiques variables, notamment de 0,1 à 25 % en volume de composition élastomérique, et de préférence de 1 à 20 % en volume.

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées conformément à l'invention sont choisies dans le groupe constitué par les graphites, les charges minérales lamellaires à base de silicium et les mélanges de telles charges.

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A.

Le graphite ne peut pas être considéré comme une charge renforçante, cependant il peut être considéré comme une charge semirenforçante (ou partiellement renforçante) dans la mesure où il permet une augmentation du module en traction d'une composition élastomérique dans laquelle il est incorporé.

Ces définitions étant données, on entend plus particulièrement par graphite susceptible d'être utilisé dans les compositions utilisables selon l'invention :
(a) tout graphite naturel, associé aux roches affectées par le métamorphisme, après séparation des impuretés accompagnant les veines de graphite et après broyage ;
(b) tout graphite naturel expansable thermiquement, i.e. dans lequel est intercalé un ou plusieurs composés chimiques à l'état liquide, par exemple un acide, entre ses plans de graphène ;
(c) tout graphite naturel expansé, ce dernier étant réalisé en deux temps : intercalation d'un ou plusieurs composés chimiques à l'état liquide, par exemple un acide, entre les plans de graphène d'un graphite naturel par traitement chimique et expansion à haute température ;
(d) tout graphite synthétique obtenu par graphitisation de coke de pétrole.

La composition élastomérique utilisable dans le flanc externe du pneumatique selon l'invention peut contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non, et sera dans les deux cas assimilé à une charge lamellaire au sens de la présente invention.

On a constaté de façon surprenante que les graphites avec n'importe lequel de ces deux types de morphologie convenaient dans la composition élastomérique utilisable selon l'invention, cependant les graphites présentant une forme lamellaire conviennent préférentiellement, et d'autant plus lorsqu'ils sont orientés de manière à présenter leur plus grande face perpendiculairement au flux de perméation de gaz.

Lorsqu'il est utilisé, le graphite est présent dans la composition élastomérique à des taux allant de 1 pce à 60 pce, et de préférence entre 5 et 30 pce.

En particulier parmi les charges minérales lamellaires à base de silicium conviennent les phyllosilicates et particulièrement celles comprises dans le groupe constitué par les smectites, le kaolin, le talc, le mica et la vermiculite.

Parmi les phyllosilicates conviennent également pour l'invention, les phyllosilicates fonctionnalisées et en particulier organo-modifiées. Selon un mode de réalisation particulier, la structure organique à laquelle est associée la charge inerte est un tensioactif de formule : -M⁺R³R⁴R⁵- ; où M représente un atome d'azote, de soufre, de phosphore ou de pyridine, et où R³, R⁴, et R⁵ représente un atome d'hydrogène, un groupe alkyle, un groupe aryle ou un groupe allyle, R³, R⁴, et R⁵ étant identiques ou différents.

En particulier, des montmorillonites organo-modifiées conviennent pour l'invention. Ainsi des montmorillonites modifiées avec un tensioactif tel qu'un sel d'ammonium quaternaire dioctadécyldiméthyl-dihydrogéné. Une telle montmorillonite organo-modifiée est commercialisée notamment par la Société Southern Clay Products sous la dénomination commerciale : « CLOISITE 6A et 20A ».

D'autres tensioactifs à base de sels d'ammonium quaternaire peuvent être encore utilisés pour modifier les phyllosilicates tels que décrits dans la demande de brevet WO06/047509.

Comme exemples de micas, on peut citer les micas commercialisés par la société CMMP (Mica-MU^{®}, Mica-Soft^{®}, Briomica^{®} par exemple), ceux commercialisés par la société YAMAGUCHI (A51S, A41S, SYA-21R, SYA-21RS, A21S, SYA-41R), les vermiculites (notamment la vermiculite Shawatec^{®} commercialisée par CMMP ou la vermiculite Microlite^{®} commercialisée par W.R. Grâce), les micas modifiés ou traités (par exemple, la gamme Iriodin^{®} commercialisée par Merck). Comme exemples de graphites, on peut citer les graphites commercialisés par la société Timcal (gamme Timrex^{®}). Comme exemple de talcs, on peut citer les talcs commercialisés par la société Luzenac.

Les charges inertes précitées, autres que le graphite sont en effet particulièrement intéressantes car elles permettent d'améliorer l'imperméabilité des compositions dans lesquelles elles sont dispersées avec un taux adéquat. Par exemple, lorsqu'elles sont utilisées, leur taux peut varier de 1 pce à 80 pce, et de préférence de 3 à 40 pce.

L'introduction des charges lamellaires dans la composition élastomérique peut être réalisée selon divers procédés connus, par exemple par mélangeage en solution, par mélangeage en masse dans un mélangeur interne, ou encore par mélangeage par extrusion.

La composition élastomérique utilisable pour le flanc externe du pneumatique selon l'invention peut comporter par ailleurs les divers additifs usuellement présents dans les flancs externes connus de l'homme du métier. On citera par exemple des charges non renforçantes ou inertes autres que les charges lamellaires précédemment décrites, des plastifiants autres que les huiles d'extension précitées et autres que les polymères incompatibles utilisés selon l'invention, des résines tackifiantes, des agents de protection tels que antioxydants ou antiozonants, anti-UV, divers agents de mise en œuvre ou autres stabilisants, ou encore des promoteurs aptes à favoriser l'adhésion au reste de la structure de l'objet pneumatique.

L'invention a également pour objet un procédé pour préparer une composition élastomérique pour la fabrication de pneumatiques telle que définie ci-dessus, caractérisé en ce qu'il comprend les étapes suivantes :
- incorporer à la matrice élastomérique, au cours d'une première étape, la ou les éventuelles charges renforçantes, en malaxant thermomécaniquement le tout, en une ou plusieurs fois, jusqu'à atteindre une température maximale T₁ comprise entre 110°C et 190°C, puis
- incorporer au mélange au cours d'une deuxième étape, le ou les polymères incompatibles jusqu'à atteindre une température T₂ supérieure à 110°C, puis
- incorporer ensuite, au cours d'une troisième étape, le système de réticulation et malaxer le tout jusqu'à une température maximale inférieure à 90°C.

De manière préférée, l'incorporation au mélange du ou des polymères incompatibles au cours de la deuxième étape s'effectue à une température maximale T₂ au moins 10°C inférieure à la température d'évaporation ou au point d'éclair du ou des polymères incompatibles.

De manière préférée dans le procédé selon l'invention, le ou les polymères incompatibles sont ajoutés en ayant été préalablement congelés à une température allant de -70°C à -10°C.

En effet, le ou les polymères incompatibles sont de préférence ajoutés sous forme solide afin de faciliter la mise en œuvre de ceux-ci dans le procédé selon l'invention.

De manière préférée, les première et deuxième étapes s'effectuent dans un mélangeur interne et la troisième étape s'effectue dans un mélangeur externe.

Ainsi, suite aux première et deuxième étapes, le mélange subit généralement plusieurs passages entre deux rouleaux dont la température est maîtrisée, c'est à dire inférieure à la température de déclenchement de la vulcanisation. La température de cette dernière étape est généralement inférieure à 90°C.

La composition finale ainsi obtenue peut ensuite être calandrée par exemple sous forme d'une feuille, d'une plaque ou encore extrudée, pour former un profilé de flanc externe utilisable dans le pneumatique selon l'invention.

L'invention ainsi que ses avantages seront compris de manière plus approfondie, à la lumière de la figure unique qui schématise, en coupe radiale, un pneumatique conforme à l'invention, ainsi que des exemples de réalisation qui suivent.

La figure unique annexée représente de manière très schématique (sans respect d'une échelle spécifique), une coupe radiale d'un pneumatique conforme à l'invention.

Ce pneumatique 1 comporte un sommet 2 renforcé par une armature de sommet ou ceinture 6, deux flancs externes 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est représenté monté sur sa jante 9. L'armature de carcasse 7 est de manière connue en soi constituée d'au moins une nappe renforcée par des câbles dits « radiaux », par exemple textile ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du pneumatique 1 comporte une couche 10 étanche à l'air, par exemple d'épaisseur égale à environ 0,9 mm, du côté de la cavité interne 11 du bandage pneumatique 1.

### Méthode de mesure

### Profondeur de stries

Pour mesurer la profondeur de stries, on utilise une éprouvette de flanc de pneumatique de section carrée (côté 15 cm) et d'épaisseur 9 mm obtenue par moulage. La cuisson des éprouvettes est réalisée sous une pression de 16 bars pendant 15 minutes à 180°C. L'éprouvette est montée sur la table d'une machine-outil. Sur le porte-outil de la machine, est fixé un cône en acier dur de 7 mm de long dont l'angle au sommet est de 75°. Pour la réalisation des cônes, le rayon de courbure à l'extrémité est spécifié inférieur à 0,1 mm. Les cônes sont nettoyés avant usage. L'enfoncement du cône depuis le point de premier contact (indentation) est de 4 mm ou de 5 mm. Après obtention de l'enfoncement souhaité, le cône est mis en mouvement parallèle à la plaque de mélange, à une vitesse de 5 mm par seconde. On relève l'aspect des rayures qui apparaissent à l'arrière du cône par suite du déchirement du mélange, à une distance suffisante, de l'ordre du centimètre, du point de premier enfoncement du cône dans le mélange de manière à ce que la rayure observée ne soit pas affectée par un éventuel phénomène transitoire, et devienne indépendante de la longueur glissée.

Pour comparer le flanc utilisable selon l'invention avec le flanc témoin, on utilise la microscopie confocale pour mesurer la profondeur des rayures. Chaque mesure par microscopie confocale est réalisée en trois points différents (deux sur le caoutchouc à proximité de la rayure et un au fond de la rayure), où celle-ci est suffisamment ouverte pour que la mesure soit réalisable.

Cette mesure de la profondeur de rayure est réalisée en dix emplacements différents de la rayure, puis la moyenne des dix mesures de profondeur est calculée.

### Exemples

### 1) Préparation des compositions

Une composition élastomérique utilisable dans le pneumatique selon l'invention (composition C) et deux compositions élastomériques utilisables dans un pneumatique comparatif (compositions A et B) ont été préparées à partir des ingrédients et des teneurs dans le tableau I ci-dessous. Les teneurs sont exprimées en pce.

**Tableau I**

| **Ingrédients** | **A (Comp.)** | **B (Comp.) C (Inv.)** | |
|---|---|---|---|
| Caoutchouc naturel | 50 | 50 | 50 |
| Caoutchouc butadiène⁽¹⁾ | 50 | 50 | 50 |
| Noir de carbone⁽²⁾ | 25 | 25 | 25 |
| Plastifiant⁽³⁾ | 10 | 20 | 10 |
| **Polymère incompatible⁽⁴⁾** | **0** | **0** | **10** |
| Antioxydant⁽⁵⁾ | 3 | 3 | 3 |
| Cire | 1,5 | 1,5 | 1,5 |
| Acide stéarique | 1 | 1 | 1 |
| ZnO | 2,5 | 2,5 | 2,5 |
| Soufre Sol2H | 1,5 | 1,5 | 1,5 |
| Accélérateur de vulcanisation⁽⁶⁾ | 1,5 | 1,5 | 1,5 |

| | | | |
|---|---|---|---|
| (1) BR ND ML63, (2) noir de carbone N683, (3) Huile MES « Catenex SNR » de la société Shell, (4) Polyisobutène « Indopol H1200 » de la société INEOS, (5) N-(1,3-diméthylbutyl)-N'-phényl-p-phénylènediamine « 6-PPD » de la société Flexsys, (6) N-cyclohexyl-2-benzothiazol-sulfénamide « Santocure CBS » de la société Flexsys. | | | |

### 2) Préparation des éprouvettes de flanc externe utilisable dans les pneumatiques selon l'invention

La composition de flanc externe de l'invention est préparée dans des mélangeurs appropriés, en utilisant deux phases de préparation successives selon une procédure générale bien connue de l'homme du métier : une première phase de travail ou malaxage thermomécanique (parfois qualifiée de phase « non-productive ») à haute température, jusqu'à une température maximale de 140°C, suivie d'une seconde phase de travail mécanique (parfois qualifiée de phase « productive ») à plus basse température de 40°C, phase de finition au cours de laquelle est incorporé le système de réticulation.

Ici, la mise en œuvre des compositions élastomériques est effectuée au moyen d'un mélangeur du type Haake RM 3000 de 360 cm³ avec des palettes de type CAM.

La préparation des éprouvettes de flanc externe est réalisée dans un mélangeur interne selon le protocole suivant détaillé dans le tableau II.

Classiquement dans la préparation de pneumatiques ou d'élément pneumatique, l'élément déterminant pour l'enchainement des étapes est la température atteinte par le mélange. Les temps sont donnés à titre indicatif.

**Tableau II : phase non-productive**

| **Temps (en min)** | **Action** | **Température en (°C)** |
|---|---|---|
| 0 | La matrice élastomérique (caoutchoucs naturel et butadiène) est introduite dans le mélangeur et le mélangeur est mis en route | 80 |
| 1 | La charge (noir de carbone) est ajoutée au mélangeur | 100 |
| 2 | Le plastifiant, l'antioxydant, l'acide stéarique et l'oxyde de zinc sont ajoutés au mélangeur | 110 |
| 3 | Un coup de pilon est donné dans le mélangeur | 120 |
| 4 | Le polymère incompatible est ajouté au mélangeur sous forme de glaçon préalablement préparé à -28°C | 130 |
| 5 | Le mélange est agité jusqu'à atteindre la température fixée | 140 |

Après refroidissement du mélange ainsi obtenu au cours de la première phase non-productive, on incorpore alors le système de réticulation à 40°C, dans un mélangeur externe à cylindres ; le tout est alors mélangé (phase productive) pendant quelques minutes, par exemple entre 2 et 15 min, ici 10 minutes.

### 3) Résultats

Les profondeurs de stries sont mesurées à deux indentations différentes (4 et 5 mm) pour la composition C utilisable selon l'invention.

Les résultats sont rassemblés dans le tableau III ci-dessous.

**Tableau III**

| **Indentation** | **Profondeur de stries (en cm)** | | |
|---|---|---|---|
| | **A (Comp.)** | **B (Comp.)** | **C (Inv.)** |
| 4 mm | 0,0222 | NM^{∗} | 0,0185 |
| 5 mm | NM^{∗} | 0,0414 | 0,0245 |

| | | | |
|---|---|---|---|
| NM^{∗} : non mesuré | | | |

Ces résultats montrent que les éprouvettes de flanc externe comparatives préparées à partir des compositions A et B présentent une profondeur de stries plus importante que les éprouvettes de flanc externe utilisable selon l'invention préparées à partir de la composition C.

Par conséquent, le pneumatique comprenant les flancs issus de la composition C présentera une résistance aux agressions extérieures meilleure que le pneumatique comprenant les flancs issus des compositions A et B.

## Revendications

1. Pneumatique pourvu d'un flanc externe, ledit flanc externe comprenant au moins une composition élastomérique à base de :
a) une matrice élastomérique comprenant au moins un élastomère diénique,
b) un système de réticulation,
c) au moins un polymère incompatible avec la matrice élastomérique, **le mélange dudit au moins un polymère incompatible et de la matrice élastomérique présentant au moins deux températures de transition vitreuse (Tg),**
la composition élastomérique comprenant au moins une charge renforçante, la teneur en charge(s) renforçante(s) dans la composition élastomérique variant de 1 à 90 pce.

2. Pneumatique selon la revendication 1, **caractérisé en ce que** le ou les élastomères diéniques sont choisis parmi les élastomères diéniques essentiellement insaturés, et les mélanges de ces élastomères.

3. Pneumatique selon l'une quelconque des revendications précédentes, **caractérisé en ce que** la teneur en élastomère(s) diénique(s) dans la composition élastomérique varie de 60 à 100 pce, de préférence de 70 à 100 pce.

4. Pneumatique selon l'une quelconque des revendications précédentes, **caractérisé en ce que** le ou les polymères incompatibles sont choisis parmi les polymères ayant une masse moléculaire moyenne en nombre inférieure ou égale à 20 000 g/mol, de préférence inférieure ou égale à 10 000 g/mol, plus préférentiellement allant de 200 à 4000 g/mol, encore plus préférentiellement allant de 200 à 3000 g/mol.

5. Pneumatique selon l'une quelconque des revendications précédentes, **caractérisé en ce que** le ou les polymères incompatibles sont choisis parmi les polybutènes.

6. Pneumatique selon l'une quelconque des revendications précédentes, **caractérisé en ce que** le polymère incompatible est un polyisobutylène.

7. Pneumatique selon l'une quelconque des revendications précédentes, **caractérisé en ce que** le ou les polymères incompatibles sont choisis parmi les liquides présentant une viscosité cinématique à 100°C variant de 20 à 200 000 SUS selon la norme ASTM D2161, de préférence de 100 à 100 000 SUS, et plus préférentiellement de 200 à 50 000 SUS.

8. Pneumatique selon l'une quelconque des revendications précédentes, **caractérisé en ce que** le ou les polymères incompatibles sont sous forme de vésicules dans la composition élastomérique.

9. Pneumatique selon l'une quelconque des revendications précédentes, **caractérisé en ce que** la teneur en polymère(s) incompatible(s) dans la composition élastomérique est inférieure à 30 pce, de préférence varie de 1 à 20 pce, plus préférentiellement varie de 5 à 15 pce.

10. Pneumatique selon l'une quelconque des revendications précédentes, **caractérisé en ce que** la ou les charges renforçantes sont du noir de carbone et/ou de la silice, et de préférence la charge renforçante est du noir de carbone.

11. Pneumatique selon l'une quelconque des revendications précédentes, **caractérisé en ce que** la teneur en charge(s) renforçante(s) dans la composition élastomérique varie de 5 à 80 pce, et en particulier de 10 à 70 pce.

12. Procédé pour préparer une composition élastomérique pour la fabrication de pneumatiques telle que définie à l'une quelconque des revendications précédentes, **caractérisé en ce qu'**il comprend les étapes suivantes :
- incorporer à la matrice élastomérique, au cours d'une première étape, la ou les charges renforçantes, en malaxant thermomécaniquement le tout, en une ou plusieurs fois, jusqu'à atteindre une température maximale T₁ comprise entre 110°C et 190°C, puis
- incorporer au mélange au cours d'une deuxième étape, le ou les polymères incompatibles jusqu'à atteindre une température T₂ supérieure à 110°C, puis
- incorporer ensuite, au cours d'une troisième étape, le système de réticulation et malaxer le tout jusqu'à une température maximale inférieure à 90°C.

13. Procédé selon la revendication 12, **caractérisé en ce que** le ou les polymères incompatibles sont ajoutés en ayant été préalablement congelés à une température allant de -70°C à -10°C.

14. Procédé selon la revendication 12 ou 13, **caractérisé en ce que** les première et deuxième étapes s'effectuent dans un mélangeur interne et la troisième étape s'effectue dans un mélangeur externe.

## Patentansprüche

1. Reifen, welcher mit einer äußeren Seitenwand versehen ist, wobei die äußere Seitenwand wenigstens eine Elastomerzusammensetzung umfasst, auf der Basis:
a) einer Elastomermatrix, die wenigstens ein Dienelastomer umfasst,
b) eines Vernetzungssystems,
c) wenigstens eines Polymers, das mit der Elastomermatrix unverträglich ist, wobei die Mischung des wenigstens einen unverträglichen Polymers und der Elastomermatrix wenigstens zwei Glasübergangstemperaturen (Tg) aufweist,
wobei die Elastomerzusammensetzung wenigstens einen verstärkenden Füllstoff umfasst, wobei der Gehalt an dem (den) verstärkenden Füllstoff(en) in der Elastomerzusammensetzung im Bereich von 1 bis 90 pce liegt.

2. Reifen nach Anspruch 1, **dadurch gekennzeichnet, dass** das oder die Dienelastomere aus den im Wesentlichen ungesättigten Dienelastomeren und den Mischungen dieser Elastomere ausgewählt sind.

3. Reifen nach einem der vorhergehenden Ansprüche, **dadurch gekennzeichnet, dass** der Gehalt an Dienelastomer(en) in der Elastomerzusammensetzung im Bereich von 60 bis 100 pce, vorzugsweise von 70 bis 100 pce liegt.

4. Reifen nach einem der vorhergehenden Ansprüche, **dadurch gekennzeichnet, dass** das oder die unverträglichen Polymere aus den Polymeren mit einer zahlenmittleren molaren Masse ausgewählt sind, die kleiner oder gleich 20 000 g/mol, vorzugsweise kleiner oder gleich 10 000 g/mol ist, stärker bevorzugt 200 bis 4000 g/mol und noch stärker bevorzugt 200 bis 3000 g/mol beträgt.

5. Reifen nach einem der vorhergehenden Ansprüche, **dadurch gekennzeichnet, dass** das oder die unverträglichen Polymere aus den Polybutenen ausgewählt sind.

6. Reifen nach einem der vorhergehenden Ansprüche, **dadurch gekennzeichnet, dass** das unverträgliche Polymer ein Polyisobutylen ist.

7. Reifen nach einem der vorhergehenden Ansprüche, **dadurch gekennzeichnet, dass** das oder die unverträglichen Polymere aus den Flüssigkeiten ausgewählt sind, die eine kinematische Viskosität bei 100 °C im Bereich von 20 bis 200 000 SUS gemäß der Norm ASTM D2161, vorzugsweise von 100 bis 100 000 SUS und stärker bevorzugt von 200 bis 50 000 SUS aufweisen.

8. Reifen nach einem der vorhergehenden Ansprüche, **dadurch gekennzeichnet, dass** das oder die unverträglichen Polymere in der Form von Bläschen in der Elastomerzusammensetzung vorliegen.

9. Reifen nach einem der vorhergehenden Ansprüche, **dadurch gekennzeichnet, dass** der Gehalt an unverträgliche(m/n) Polymer(en) in der Elastomerzusammensetzung niedriger als 30 pce ist, vorzugsweise im Bereich von 1 bis 20 pce liegt und stärker bevorzugt im Bereich von 5 bis 15 pce liegt.

10. Reifen nach einem der vorhergehenden Ansprüche, **dadurch gekennzeichnet, dass** der oder die verstärkenden Füllstoffe Ruß und/oder Siliciumdioxid sind und vorzugsweise der verstärkende Füllstoff Ruß ist.

11. Reifen nach einem der vorhergehenden Ansprüche, **dadurch gekennzeichnet, dass** der Gehalt an verstärkende(m/n) Füllstoff(en) in der Elastomerzusammensetzung im Bereich von 5 bis 80 pce und insbesondere von 10 bis 70 pce liegt.

12. Verfahren zum Herstellen einer Elastomerzusammensetzung für die Herstellung von Reifen, wie in einem der vorhergehenden Ansprüche definiert, **dadurch gekennzeichnet, dass** es die folgenden Schritte umfasst:
- Einbringen des oder der verstärkenden Füllstoffe in einem ersten Schritt in die Elastomermatrix, indem das Ganze ein oder mehrere Male thermomechanisch geknetet wird, bis eine maximale Temperatur T₁ zwischen 110 °C und 190 °C erreicht wird, danach
- Einbringen des oder der unverträglichen Polymere in einem zweiten Schritt in die Mischung, bis eine Temperatur T₂ erreicht wird, die höher als 110 °C ist, danach
- anschließend Einbringen, in einem dritten Schritt, des Vernetzungssystems und Kneten des Ganzen bis zu einer maximalen Temperatur, die niedriger als 90 °C ist.

13. Verfahren nach Anspruch 12, **dadurch gekennzeichnet, dass** das oder die unverträglichen Polymere zugegeben werden, nachdem sie zuvor auf eine Temperatur im Bereich von -70 °C bis -10 °C heruntergekühlt wurden.

14. Verfahren nach Anspruch 12 oder 13, **dadurch gekennzeichnet, dass** der erste und der zweite Schritt in einem Innenmischer durchgeführt werden und der dritte Schritt in einem Außenmischer durchgeführt wird.

## Claims

1. Tyre provided with an external sidewall, said external sidewall comprising at least one elastomeric composition based on:
a) an elastomeric matrix comprising at least one diene elastomer,
b) a crosslinking system,
c) at least one polymer incompatible with the elastomeric matrix, the mixture of this polymer and of the elastomeric matrix exhibiting at least two glass transition temperatures (Tg),
the elastomeric composition comprising at least one reinforcing filler, the content of reinforcing filler(s) in the elastomeric composition ranges from 1 to 90 phr.

2. Tyre according to Claim 1, **characterized in that** the diene elastomer or elastomers are chosen from essentially unsaturated diene elastomers and the mixtures of these elastomers.

3. Tyre according to any one of the preceding claims, **characterized in that** the content of diene elastomer(s) in the elastomeric composition ranges from 60 to 100 phr, preferably from 70 to 100 phr.

4. Tyre according to any one of the preceding claims, **characterized in that** the incompatible polymer or polymers are chosen from polymers having a number-average molecular weight of less than or equal to 20 000 g/mol, preferably of less than or equal to 10 000 g/mol, more preferably ranging from 200 to 4000 g/mol and more preferably still ranging from 200 to 3000 g/mol.

5. Tyre according to any one of the preceding claims, **characterized in that** the incompatible polymer or polymers are chosen from polybutenes.

6. Tyre according to any one of the preceding claims, **characterized in that** the incompatible polymer is a polyisobutylene.

7. Tyre according to any one of the preceding claims, **characterized in that** the incompatible polymer or polymers are chosen from liquids exhibiting a kinematic viscosity at 100°C ranging from 20 to 200 000 SUS according to Standard ASTM D2161, preferably from 100 to 100 000 SUS and more preferably from 200 to 50 000 SUS.

8. Tyre according to any one of the preceding claims, **characterized in that** the incompatible polymer or polymers are in the form of vesicles in the elastomeric composition.

9. Tyre according to any one of the preceding claims, **characterized in that** the content of incompatible polymer(s) in the elastomeric composition is less than 30 phr, preferably ranges from 1 to 20 phr, more preferably ranges from 5 to 15 phr.

10. Tyre according to any one of the preceding claims, **characterized in that** the reinforcing filler or fillers are carbon black and/or silica, and preferably the reinforcing filler is carbon black.

11. Tyre according to any one of the preceding claims, **characterized in that** the content of reinforcing filler(s) in the elastomeric composition ranges from 5 to 80 phr, and in particular from 10 to 70 phr.

12. Process for preparing an elastomeric composition for the manufacture of tyres as defined in any one of the preceding claims, **characterized in that** it comprises the following stages:
- incorporating the reinforcing filler or fillers in the elastomeric matrix during a first stage, everything being kneaded thermomechanically, in one or more goes, until a maximum temperature T₁ of between 110°C and 190°C is reached, then
- incorporating the incompatible polymer or polymers in the mixture during a second stage, until a temperature T₂ of greater than 110°C is reached, then
- subsequently incorporating, during a third stage, the crosslinking system and kneading everything up to a maximum temperature of less than 90°C.

13. Process according to Claim 12, **characterized in that** the incompatible polymer or polymers are added by having been frozen beforehand to a temperature ranging from -70°C to -10°C.

14. Process according to Claim 12 or 13, **characterized in that** the first and second stages are carried out in an internal mixer and the third stage is carried out in an external mixer.
